# EUROPEAN PATENT SPECIFICATION

(11) **EP 2 182 780 B1**
(45) Date of publication and mention of the grant of the patent: **22.05.2013**
(21) Application number: 09013518.7
(22) Date of filing: 27.10.2009
(51) Int. Cl.: H05B 41/288

(54) **High pressure discharge lamp lighting device, and illumination fixture and illumination system using the same**
Beleuchtungsvorrichtung mit Hochdruckentladungslampe, Beleuchtungsbefestigung und Beleuchtungssystem damit
Dispositif d'éclairage de lampe à décharge haute pression, et appareil d'éclairage et système d'éclairage l'utilisant

(30) Priority: 28.10.2008 JP 2008277428
(43) Date of publication of application: 05.05.2010
(73) Proprietor: Panasonic Corporation, Osaka 571-8501 (JP)
(72) Inventor: Satoru, Nagataatu, Kobe HyougoKobe Hyougo (JP); Jun, Kumagai, Suita Osaka, 565-0821 (JP); Nobutoshi, Matsuzaki, Osaka (JP)
(74) Representative: Rüger, Barthelt & Abel

(56) References cited:
- WO-A1-03/039206
- WO-A2-2008/132646
- US-A- 5 932 976

## Description

### [Field of the Invention]

The present invention relates to a high pressure discharge lamp lighting device, and an illumination fixture and an illumination system using the high pressure discharge lamp lighting device.

### [Background Art]

As a conventional high pressure discharge lamp lighting device for lighting a high pressure discharge lamp such as an HID lamp, a high starting voltage generated due to resonance effect of an LC resonance circuit formed of an inductor and a capacitor is applied to the high pressure discharge lamp to start and light the high pressure discharge lamp (refer to, for example, Patent document 1).

The high pressure discharge lamp lighting device disclosed in the above-mentioned Patent document includes an AC/DC converting circuit for converting AC power source to DC power source, a DC/DC converter for generating a rectangular wave voltage by switching an output of the AC/DC converting circuit and supplying the output to a load circuit part including the high pressure discharge lamp and a control circuit for controlling switching operations of the AC/DC converting circuit and the DC/DC converter.

The control circuit controls the switching operations of the AC/DC converting circuit and the DC/DC converter so as to sequentially perform a resonance ignition phase of starting the high pressure discharge lamp, a warm-up phase of generating glow discharge and preheating lamp electrodes and a normal operation phase of applying the rectangular wave voltage to the high pressure discharge lamp to stably light the high pressure discharge lamp for starting and lighting the high pressure discharge lamp.

That is, at start and lighting of the high pressure discharge lamp, first, by electrically resonating the inductor and the capacitor which form the LC resonance circuit in the resonance ignition phase, a sufficiently high starting voltage necessary for producing electrical breakdown of the high pressure discharge lamp is generated and the starting voltage is applied between both ends of the high pressure discharge lamp.

Next, in the warm-up phase, by applying a voltage of a frequency which is relatively lower than the frequency in the resonance ignition phase to the high pressure discharge lamp, glow discharge is generated to preheat the lamp electrodes, and in the subsequent normal operation phase, by continuously generating arc discharge, the high pressure discharge lamp is stably lighted.
[Patent document] Japanese Translation of PCT No. 2005-507553

### [Disclosure of the Invention]

### [Problems to be solved by the Invention]

In the high pressure discharge lamp lighting device disclosed in the above-mentioned Patent document, when the high pressure discharge lamp fades out in the warm-up phase, only a voltage up to a bus voltage of about 300V as the output of the DC/DC converter can be applied to the high pressure discharge lamp as a restarting voltage. Thus, when the high pressure discharge lamp is completely put out, the high pressure discharge lamp disadvantageously fails to start. When the high pressure discharge lamp fails to start, in the above-mentioned high pressure discharge lamp lighting device, the resonance ignition phase and the warm-up phase are repeatedly performed, increasing in start-up time.

Since the high starting voltage is applied to the high pressure discharge lamp in the resonance ignition phase, when the high pressure discharge lamp does not start even if the starting voltage is continuously applied within one second, a discharge vapor pressure in a glass bulb needs to be decreased prior to restart and, after a down time for a few seconds to few minutes, the high starting voltage is applied again. Therefore, in the high pressure discharge lamp lighting device disclosed in the above-mentioned Patent document, even if the high pressure discharge lamp is firstly started, the down time for a few seconds to few minutes is provided, thereby delaying start of the high pressure discharge lamp.

The present invention is made in consideration of the above-mentioned problem and an object of the present invention is to provide a high pressure discharge lamp lighting device with improved startability of the high pressure discharge lamp, and an illumination fixture and an illumination system which use the high pressure discharge lamp lighting device.

### [Means adapted to solve the Problems]

To attain the above-mentioned object, according to a first aspect of the invention, a high pressure discharge lamp lighting device includes a DC power part, an ignitor circuit part including an LC resonance circuit, the ignitor circuit part generating a starting voltage for producing electrical breakdown of a high pressure discharge lamp by switching an output of the DC power part, a power converting part for converting the output of the DC power part into a rectangular wave AC by switching and supplying the AC to a load circuit part including the high pressure discharge lamp to stably light the high pressure discharge lamp, and a control circuit part for sequentially switching switching operations of the ignitor circuit part and the power converting part among three modes: an electrical breakdown mode of producing electrical breakdown of the high pressure discharge lamp, a high frequency preheat mode of supplying a preheat current to the high pressure discharge lamp and preheating lamp electrodes and a rectangular wave lighting mode of supplying the rectangular wave AC to the high pressure discharge lamp to stably light the high pressure discharge lamp, and the control circuit part, in the electrical breakdown mode, generates the starting voltage by switching the switching element of the ignitor circuit part around a first switching frequency which is 1/(an add number) of a resonance frequency of the LC resonance circuit with the lamp unlit, and in the high frequency preheat mode, supplies a high frequency voltage obtained by switching the switching element of the ignitor circuit part to the load circuit part around a second switching frequency which is lower than the first switching frequency and is equal to 1/(an add number) of the resonance frequency with the lamp unlit.

According to a second aspect of the invention, in the first aspect of the invention, the control circuit part, in the high frequency preheat mode, sweeps and switches the switching frequency of the ignitor circuit part in a predetermined frequency range including the second switching frequency.

According to a third aspect of the invention, in the second aspect of the invention, the predetermined frequency range is a frequency band on the delay phase side with respect to frequency characteristics of the LC resonance circuit and the load circuit part including the lighted high pressure discharge lamp.

According to a fourth aspect of the invention, in any one of the first to third aspects of the invention, in shift from the electrical breakdown mode to the high frequency preheat mode, the control circuit part gradually lowers the switching frequency of the ignitor circuit part over time from around the first switching frequency to around the second switching frequency.

According to a fifth aspect of the invention, in the.fourth aspect of the invention, in shift from the electrical breakdown mode to the high frequency preheat mode, the control circuit part lowers the switching frequency of the ignitor circuit part from around the first switching frequency to around the second switching frequency in stages.

According to a sixth aspect of the invention, in the fifth aspect of the invention, in lowering the switching frequency in stages, the control circuit part sets one or more intermediate frequencies which are lower than the first switching frequency and higher than the second switching frequency and are equal to 1/(an add number) of the resonance frequency and lowers the switching frequency from the first switching frequency to the second switching frequency through the one or more intermediate frequencies in stages.

According to a seventh aspect of the invention, an illumination fixture includes the high pressure discharge lamp lighting device stated in any one of the first to sixth aspects of the invention and a lighting fitting including a discharge lamp receiving electrical power from the discharge lamp lighting device.

According to an eighth aspect of the invention, in the first aspect of the invention, an illumination system includes the illumination fixture stated in the seventh aspect of the invention for controlling lighting.

### [Effect of the Invention]

According to the first aspect of the invention, in switching the operation mode of the discharge lamp lighting device from the electrical breakdown mode to the high frequency preheat mode, since the control circuit part switches the ignitor circuit part around the second switching frequency which is lower than the first switching frequency in the electrical breakdown mode and is equal to 1/(an add number) of the resonance frequency of the LC resonance circuit with the lamp unlit, when fade-out occurs in the high frequency preheat mode, the resonance voltage which is higher than the output of the DC power part can be applied to the high pressure discharge lamp due to the resonance effect of the LC resonance circuit. Therefore, the high pressure discharge lamp can be easily lighted again and startability of the high pressure discharge lamp can be improved.

According to the second aspect of the invention, when fade-out occurs in the high frequency preheat mode, the control circuit part sweeps the switching frequency of the ignitor circuit part in the predetermined frequency range including the second switching frequency. Accordingly, as the switching frequency gets closer to the resonance frequency, resonance is enforced and the resonance voltage which is higher than the output of the DC power part can be applied to the high pressure discharge lamp due to the resonance effect of the LC resonance circuit. Therefore, as in the first aspect of the invention, the high pressure discharge lamp can be easily lighted again and startability of the high pressure discharge lamp can be improved. :

According to the third aspect of the invention, as the control circuit part lowers the switching frequency in the high frequency preheat mode, the lamp current supplied to the high pressure discharge lamp is increased. Therefore, both the lamp electrodes of the high pressure discharge lamp can be sufficiently heated and glow discharge can be shifted to arc discharge more easily.

According to the fourth aspect of the invention, when the electrical breakdown mode is shifted to the high frequency preheat mode, by gradually lowering the switching frequency, a charging current to the capacitor forming the LC resonance circuit is prevented from rapidly increasing to reduce stress exerted on circuit components.

According to the fifth aspect of the invention, when the electrical breakdown mode is shifted to the high frequency preheat mode, by lowering the switching frequency in stages, as in the fourth aspect of the invention, the charging current to the capacitor forming the LC resonance circuit is prevented from rapidly increasing to reduce stress exerted on the circuit components.

According to the sixth aspect of the invention, when the control circuit part lowers the switching frequency in stages in switching of the operation mode, the switching frequency is lowered to the second switching frequency in stages through one or more intermediate frequencies which are lower than the first switching frequency and higher than the second switching frequency and are equal to 1/(an add number) of the resonance frequency, and when the high pressure discharge lamp fades out immediately after mode switching when fade-out is easy to occur, by performing the switching operation at the intermediate frequencies closer to the resonance frequency than the second switching frequency, the voltage generated through LC resonance can be increased and the high pressure discharge lamp can be lighted after fade-out again more easily. Thus, startability of the high pressure discharge lamp can be further improved.

According to the seventh aspect of the invention, the illumination fixture capable of achieving the same effects as those in any of the first to sixth aspects of the invention can be provided.

According to the eighth aspect of the invention, the illumination system capable of achieving the same effects as those in the seventh aspect of the invention can be provided.

### [Best Mode for Carrying Out the Invention]

Embodiments of the present invention will be described referring to figures.

### (First embodiment)

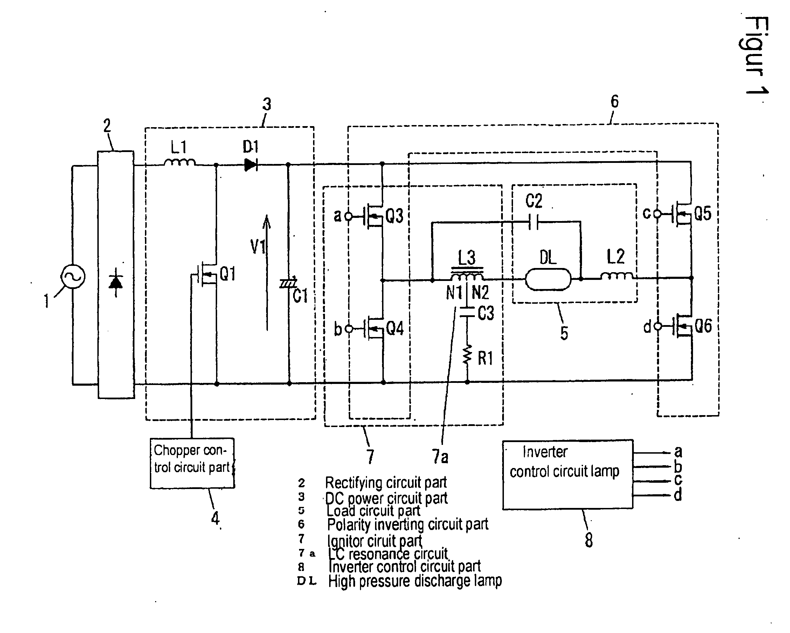

A first embodiment of the present invention will be described referring to Fig. 1 to Fig. 5. A high pressure discharge lamp lighting device in this embodiment has, as shown in a block circuit diagram of Fig. 1, a rectifying circuit part 2 formed of a diode bridge for full-wave rectifying a commercial AC power source 1, a DC power circuit part 3 for smoothing an output of the rectifying circuit part 2, a chopper control circuit part 4 for controlling an output of the DC power circuit part 3, a load circuit part 5 including a high pressure discharge lamp DL such as an HID lamp, a polarity inverting circuit part 6 for converting a DC output of the DC power circuit part 3 into a rectangular wave AC power by switching and supplying the AC power to the load circuit part 5, an ignitor circuit part 7 for generating a starting voltage for producing electrical breakdown of the high pressure discharge lamp DL by switching a DC output of the DC power circuit part 3 and an inverter control circuit part 8 for controlling switching operations of the polarity inverting circuit part 6 and the ignitor circuit part 7.

The DC power circuit part 3 is formed of a step-up type chopper circuit and includes an inductor L1, one end of which is connected to a high-pressure side output end of the rectifying circuit part 2, a switching element Q1 formed of a MOS field effect transistor (MOSFET), drain-source of which is connected between the other end of the inductor L1 and a low-pressure side output end of the rectifying circuit part 2, a diode D1, an anode of which is connected to the other end of the inductor L1 and an electrolytic capacitor C1 connected between a cathode of the diode D1 and the low-pressure side output end of the rectifying circuit part 2.

The chopper control circuit part 4 detects an output voltage V1 (voltage between both ends of the electrolytic capacitor C1) of the DC power circuit part 3 and controls the output voltage V1 to a desired voltage value by controlling the switching frequency and the on/off duty ratio of the switching element Q1. Here, the rectifying circuit part 2, the DC power circuit part 3 and the chopper control circuit part 4 form a DC power part.

The polarity inverting circuit part 6 includes a 4 piece full bridge circuit having a series circuit formed of switching elements Q3, Q4 each connected between output ends (that is, between both ends of the capacitor C1) of the DC power circuit part 3 and a series circuit formed of switching elements Q5, Q6, an inductor L3 with an auto-transformer structure, the high pressure discharge lamp DL and an inductor L2 are serially connected between a connection point between the switching elements Q3, Q4 and a connection point between the switching elements Q5, Q6, and also a capacitor C2 is connected in parallel with the series circuit formed of the inductor L3 and the high pressure discharge lamp DL. Here, an LC resonance circuit formed of the inductor L2 and the capacitor C2 and the high pressure discharge lamp DL form the load circuit part 5.

The ignitor circuit part 7 includes a pair of switching elements Q3, Q4 and a pair of switching elements Q5, Q6 in the polarity inverting circuit part 6 connected between the output ends of the DC power circuit part 3, the inductor L3 and a series circuit formed of a capacitor C3 and a resistor R1 which are connected between both ends of a primary winding (shunt winding) N1 of the inductor L3 through the switching element Q4, and a series winding N2 of the inductor L3 is connected to the high pressure discharge lamp DL. The primary winding N1 of the inductor L3 and the capacitor C3 form an LC resonance circuit 7a.

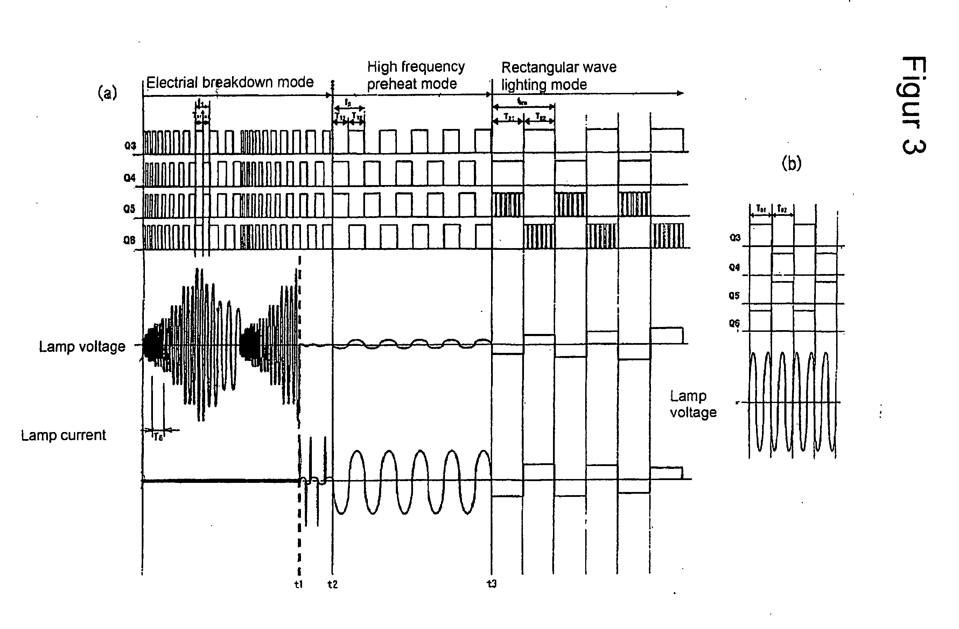

The inverter control circuit part 8 is formed of, for example, a microcomputer and controls on/off of each of the switching elements Q3 to Q6 depending on the load state. For example, in stable lighting (rectangular wave lighting mode) of the high pressure discharge lamp DL, the inverter control circuit part 8 alternates a first period (period T22 in Fig. 3(a)) for turning on/off the pair of switching elements Q3, Q6 in the state where the pair of switching elements Q4, Q5 located at diagonal positions are turned off and a second period (period T21 in Fig. 3(a) in) for turning on/off the pair of switching elements Q4, Q5 in the state where the pair of switching elements Q3, Q6 are turned off at a relatively low frequency. The switching element Q6 is turned on/off at a relatively high frequency in the state where the switching element Q3 is turned on during the first period T22, and the switching element Q5 is turned on/off at a relatively high frequency in the state where the switching element Q4 is turned on during the second period T21.

Next, an operation of shifting the high pressure discharge lamp DL from the non-lighting state to the stable lighting state by the high pressure discharge lamp lighting device will be described referring to Figs. 3(a) and 3(b). Fig. 3(a) is a waveform chart of each part in the period when the high pressure discharge lamp DL shifts from the non-lighting state to the stable lighting state and Fig. 3(b) shows relationship between a switching operation and a lamp voltage during a period Ta in electrical breakdown mode.

First, when a lighting switch not shown in the high pressure discharge lamp DL is turned on in the non-lighting state, the chopper control circuit part 4 and the inverter control circuit part 8 starts a control operation and the chopper control circuit part 4 controls on/off of the switching element Q1, thereby allowing the DC power circuit part 3 to perform a chopper operation to output a DC voltage of a desired voltage value obtained by raising an input voltage.

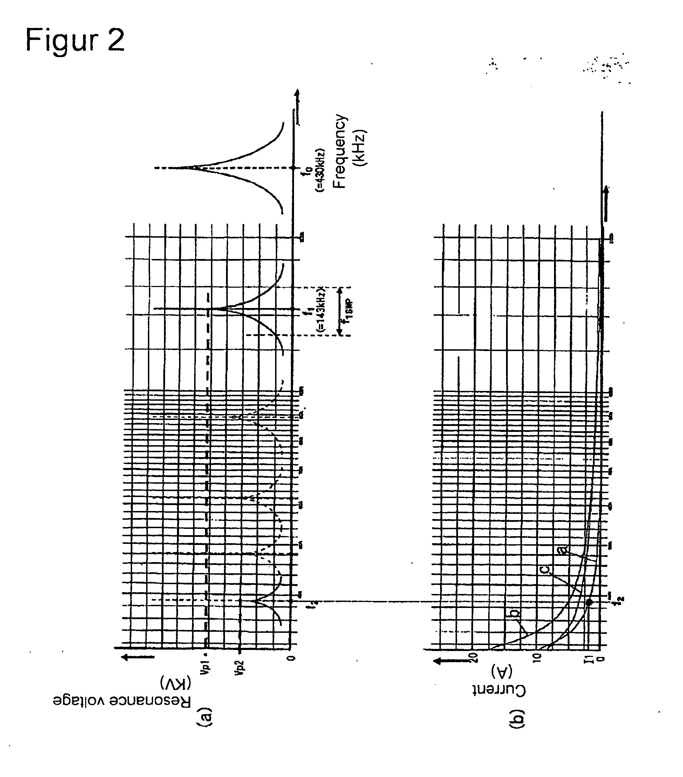

First, the inverter control circuit part 8 starts its operation in the electrical breakdown mode (period TM1 in Fig. 3(a)) and resonates the LC resonance circuit 7a by alternately providing a period T01 when the pair of switching elements Q3, Q6 are turned on and the pair of switching elements Q4, Q5 are turned off and a period T02 when the pair of switching elements Q3, Q6 are turned off and the pair of switching elements Q4, Q5 are turned on around a first switching frequency f1 of a few hundred kHz as 1/(an add number) of a resonance frequency f0 of the LC resonance circuit 7a, and at this time, applying a voltage obtained by raising a resonance voltage occurring in the primary winding N1 of the inductor L3 by a winding ratio of the primary winding (shunt winding) N1 to the series winding N2 to between electrodes of the high pressure discharge lamp DL to generate electrical breakdown. Here, Fig. 2(a) shows relationship between frequency characteristic and operating frequency of the LC resonance circuit 7a in no-load (non-lighting state of the high pressure discharge lamp DL), and in this embodiment, the resonance frequency f0 of the LC resonance circuit 7a is about 430 kHz. Generally, in the electrical breakdown mode, the inverter control circuit part 8 sweeps the operating frequency for alternately turning on the pair of switching elements Q3, Q6 and the pair of switching elements Q4, Q5 around the first switching frequency f1 (about 143 kHz) as 1/(an add number) (for example, one third) of the resonance frequency f0, that is, a predetermined frequency range f1_{swp} including the first switching frequency f1 (for example, 96 kHz to 160 kHZ). According to the sweeping of the operating frequency, magnitude of the lamp voltage V1a applied between both ends of the high pressure discharge lamp DL changes due to the resonance effect of the LC resonance circuit 7a. As the operating frequency becomes closer to the first switching frequency f1 (about 143kHz) as 1/(an add number) of the resonance frequency f0, the lamp voltage V1a is increased and a starting voltage Vp1 necessary for producing electrical breakdown of the high pressure discharge lamp DL can be applied to the high pressure discharge lamp DL, thereby producing electrical breakdown of the high pressure discharge lamp DL (time t1 in Fig. 3(a)). The inverter control circuit part 8 may set the first switching frequency f1 in the electrical breakdown mode to the resonance frequency f0 or the frequency of 1/(an add number) of the resonance frequency f0. A high resonance voltage is applied to the high pressure discharge lamp DL due to the resonance effect of the LC resonance circuit 7a, thereby capable of producing electrical breakdown of the pressure discharge lamp DL.

When electrical breakdown of the high pressure discharge lamp DL occurs in the above-mentioned electrical breakdown mode, glow discharge is generated in the high pressure discharge lamp DL and then, arc discharge occurs. However, a mode in which a preheat current is supplied to lamp electrodes on both sides to rapidly heat the both lamp electrodes is a high frequency preheat mode (period TM2 in Fig. 3(a)). Here, Fig. 2(b) shows frequency characteristics of a lamp current at start of the high pressure discharge lamp DL (in the high frequency preheat mode) ((a) in the figure), a capacitor current flowing through the capacitor C2 (b in the figure) and a choke current flowing through the chokes L2, L3 (c in the figure) and a constant of each circuit component is set so that a lamp current I1 flowing to the high pressure discharge lamp DL within synthetic impedance of the inductors L2, L3, the capacitor C3 and the high pressure discharge lamp DL at a second switching frequency f2 described later may have a desired current value (that is, current value necessary for preheating the lamp electrodes).

In the high frequency preheat mode, the inverter control circuit 8 alternates a period T11 when the pair of switching elements Q3, Q6 are turned off and the pair of switching elements Q4, Q5 are turned on and a period T12 when the pair of switching elements Q3, Q6 are turned on and the pair of switching elements Q4, Q5 are turned off at the second switching frequency f2 (about 39 kHz) which is lower than the first switching frequency f1 and is equal to 1/(an add number) of the resonance frequency F0 (one eleventh in this embodiment) and the lamp current I1 is supplied to both the lamp electrodes of the high pressure discharge lamp DL to heat both the lamp electrodes. The second switching frequency f2 in the high frequency preheat mode is set to be in a frequency band on the delay phase side with respect to frequency characteristics of the LC resonance circuit 7a and the load circuit part 5 including the lighted high pressure discharge lamp DL.

When both the lamp electrodes of the high pressure discharge lamp DL are equally preheated in the high frequency preheat mode, the inverter control circuit part 8 switches the mode from the high frequency preheat mode to the rectangular wave lighting mode at a time t3 in Fig. 3(a). In the rectangular wave lighting mode (period TM3 in Fig. 3(a)), the inverter control circuit part 8 alternates the first period T21 when the pair of switching elements Q3, Q6 are turned on/off in the state where the pair of the switching elements Q4, Q5 located diagonally with each other are turned off and the second period T22 when the pair of switching elements Q4, Q5 are turned on/off in the state where the pair of switching elements Q3, Q6 are turned off at a relatively low frequency (for example, a few dozens of Hz to a few hundred of Hz). By turning on/off the switching element Q6 in the state where the switching element Q3 is turned on at a relatively high frequency in the first period T21 and turning on/off the switching element Q5 in the state where the switching element Q4 is turned on at a relatively high frequency in the second period T22, a rectangular wave AC voltage of a few dozens of Hz to a few hundred of Hz is applied to the high pressure discharge lamp DL. At this time, the lamp voltage is gradually increased as the temperature in a glass bulb of the high pressure discharge lamp increases, and after lapse of a few minutes, the lamp voltage is put into a substantially uniform stable state. Since arc discharge is continuously generated in this state, the high pressure discharge lamp DL is kept in the stable lighting state.

As described above, the inverter control circuit part 8 shifts the high pressure discharge lamp DL from the non-lighting state to the stable lighting state by sequentially switching the three modes: the electrical breakdown mode, the high frequency preheat mode and the rectangular wave lighting mode. However, depending on the state of the high pressure discharge lamp DL, the high pressure discharge lamp DL can fade out during preheating in the high frequency preheat mode.

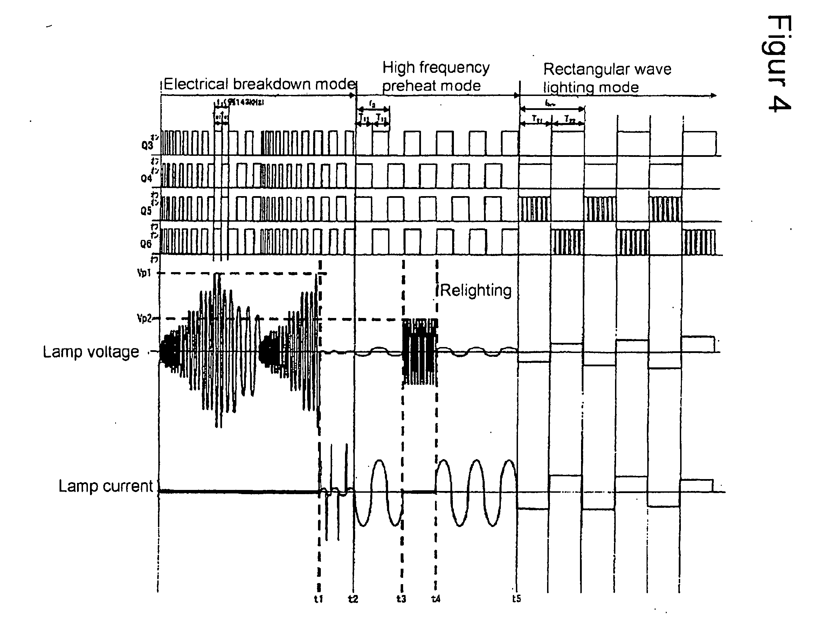

Fig. 4 is a waveform chart of each part in the case where fade-out occurs in the high frequency preheat mode. When electrical breakdown occurs at the time t1 in the electrical breakdown mode and the mode is switched from the electrical breakdown mode to the high frequency preheat mode at the time t2 and after that, fade-out occurs at the time t3 during high-frequency preheating of both the lamp electrodes of the high pressure discharge lamp DL, the inverter control circuit part 8 alternates the period T11 when the pair of switching elements Q3, Q6 are turned off and the pair of switching elements Q4, Q5 are turned on and the period T12 when the pair of switching elements Q3, Q6 are turned on and the pair of switching elements Q4, Q5 are turned off at the second switching frequency f2. Here, when the resonance frequency of the LC resonance circuit 7a in no-load is defined as f0, the second switching frequency f2 (about 39 kHz) is set to a frequency of 1/(an add number) (for example, one eleventh) of the resonance frequency f0. Thus, a resonance voltage Vp2 which is higher than the output voltage V1 of the DC power circuit part 3 can be applied between the lamp electrodes of the high pressure discharge lamp DL due to resonance effect of the LC resonance circuit 7a to regenerate electrical breakdown. Whereby, the high pressure discharge lamp DL can be shifted to the high frequency preheat mode and then, to the rectangular wave lighting mode when both the lamp electrodes are sufficiently heated. As the result, the high pressure discharge lamp DL can be stably lighted.

That is, in the discharge lamp lighting device in this embodiment, in the high frequency preheat mode, the inverter control circuit part 8 allows the switching elements Q3 to Q6 of the ignitor circuit part 7 to be switched at the second switching frequency f2 which is lower than the first switching frequency f1 and is equal to 1/(an add number) of the resonance frequency f0 to high-frequency heat both the lamp electrodes of the high pressure discharge lamp DL. When the lamp electrodes are sufficiently heated, the operation mode is shifted to the rectangular wave lighting mode and the pressure discharge lamp DL is stably lighted. Accordingly, when fade-out occurs during preheating of the high pressure discharge lamp DL, since the switching frequency of the ignitor circuit part 7 is set to the second switching frequency f2 as a frequency which is lower than the first switching frequency f1 and is equal to 1/(an add number) of the resonance frequency f0 in no-load in the high frequency preheat mode, the resonance voltage which is higher than the output voltage of the DC power part can be applied to the pressure discharge lamp DL due to the resonance effect of the LC resonance circuit 7a and electrical breakdown of the high pressure discharge lamp DL can be produced again to return to the operation mode to the high frequency preheat mode. Therefore, it is possible to provide the pressure discharge lamp lighting device with less failure to start and improved startability.

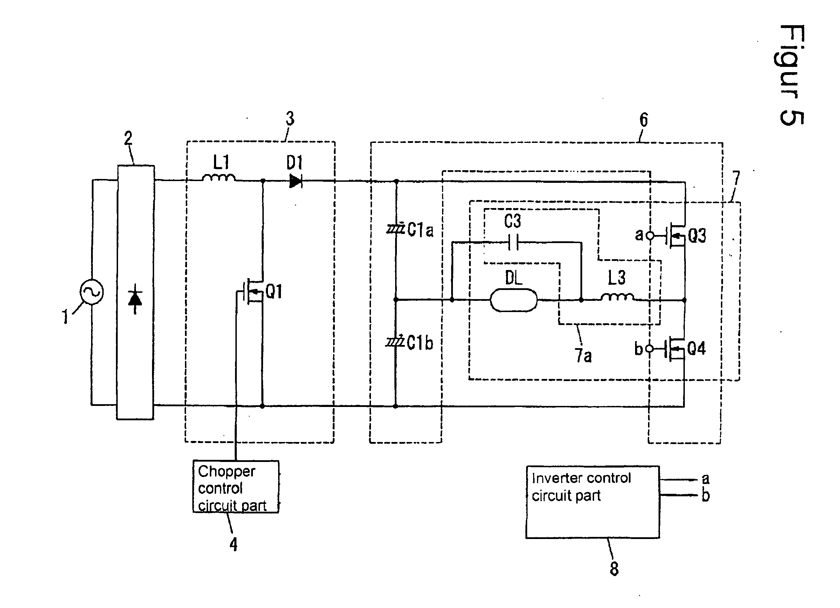

Although the polarity inverting circuit part 6 is formed of the full-bridge circuit in this embodiment, the polarity inverting circuit part 6 may have half-bridge structure as shown in Fig. 5. In the circuit shown in Fig. 5, two electrolytic capacitors C1a, C1b are serially connected between output terminals of the DC power circuit part 3 and a series circuit formed of the switching elements Q3, Q4 is connected to the series circuit formed of the electrolytic capacitor C1a, C1b in parallel. The LC resonance circuit 7a as the series circuit formed of the capacitor C3 and the inductor L3 is connected between a connection point of the electrolytic capacitors C1a, C1b and a connection point of the switching elements Q3, Q4, and the high pressure discharge lamp DL is connected to the capacitor C3 in parallel. Here, the switching elements Q3, Q4 and the electrolytic capacitors C1a, C1b form the polarity inverting circuit part 6, and the switching elements Q3, Q4 and the LC resonance circuit 7a formed of the capacitor C3 and the inductor L3 form the ignitor circuit part 7.

Also in the high pressure discharge lamp lighting device shown in Fig. 5, the inverter control circuit part 8 lights the high pressure discharge lamp DL by sequentially switching the three modes: the electrical breakdown mode, the high frequency preheat mode and the rectangular wave lighting mode. By alternately turning on the switching elements Q3, Q4 around the first switching frequency f1 (the above-mentioned frequency range f1_{swp}) as a frequency corresponding to 1/(an add number) of the resonance frequency f0 of the LC resonance circuit 7a in the electrical breakdown mode, the inverter control circuit part 8 generates the starting voltage for producing electrical breakdown of the high pressure discharge lamp DL. In the high frequency preheat mode, the inverter control circuit part 8 supplies a high frequency voltage generated by alternately turning on the switching elements Q3, Q4 at the second switching frequency f2 which is lower than the first switching frequency f1 and is equal to 1/(an add number) of the resonance frequency f0 to both the lamp electrodes of the high pressure discharge lamp DL to preheat both the lamp electrodes. In the subsequent rectangular wave lighting mode, the inverter control circuit part 8 alternates on/off of the switching element Q3 and on/off of the switching element Q4 at a relatively low frequency of a few dozens of Hz to a few hundred of Hz and supplies a relatively low frequency rectangular wave AC voltage to the high pressure discharge lamp DL, thereby stably lighting the high pressure discharge lamp DL.

Also in this discharge lamp lighting device, similarly to the above-mentioned discharge lamp lighting device having the polarity inverting circuit part 6 with full-bridge structure, when the high pressure discharge lamp DL fades out in the high frequency preheat mode, the switching elements Q3, Q4 are switched at the second switching frequency f2 which is lower than the first switching frequency f1 and is equal to 1/(an add number) of the resonance frequency f0 in no-load. Accordingly, the resonance voltage which is higher than the output voltage of the DC power circuit part 3 can be applied to the high pressure discharge lamp DL due to the resonance effect of the LC resonance circuit 7a and electrical breakdown of the high pressure discharge lamp DL can be produced, thereby returning the operation mode to the high frequency preheat mode. Therefore, it is possible to decrease failure to start and improve startability.

### (Second embodiment)

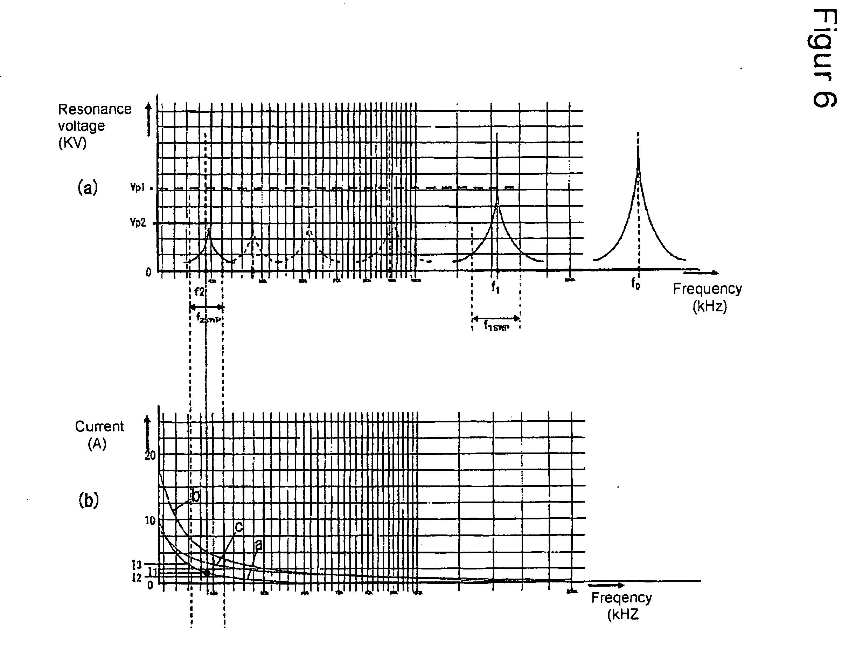

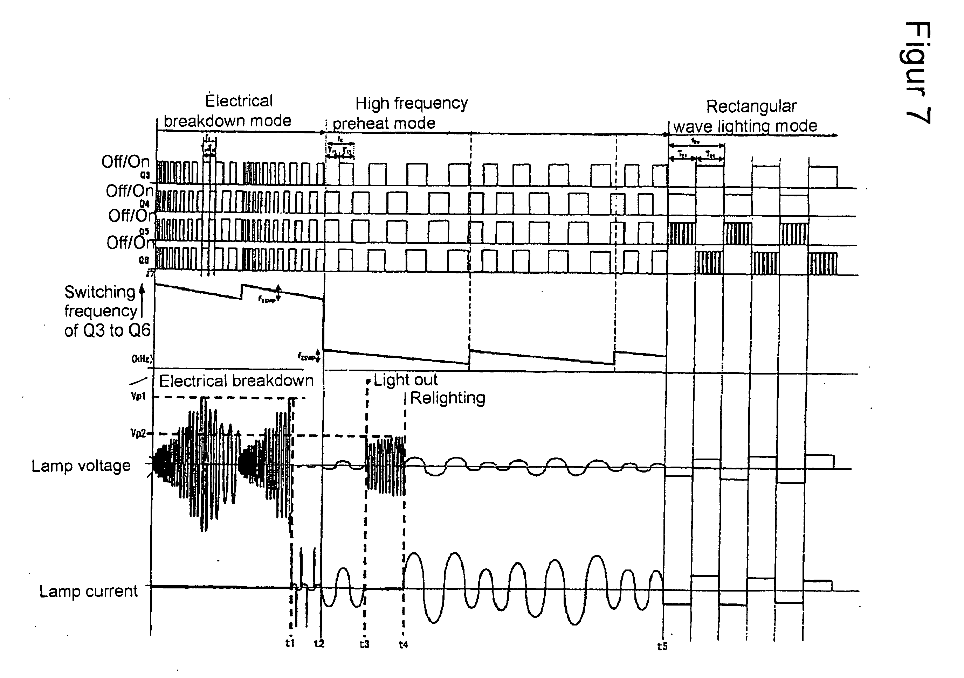

A second embodiment of the present invention will be described referring to Fig. 6 and Fig. 7. Since circuit structure of the high pressure discharge lamp lighting device is the same as that in Fig. 1 described in First embodiment, illustration and description thereof are omitted.

Operation of the high pressure discharge lamp DL shifting from the non-lighting state to the stable lighting state in this embodiment will be described referring to Fig. 7. Since operation in the electrical breakdown mode and the rectangular wave lighting mode is the same as that in First embodiment, description thereof is omitted.

When electrical breakdown of the high pressure discharge lamp DL occurs at a time t1 in the electrical breakdown mode (period TM1 in Fig. 7), glow discharge is generated in the high pressure discharge lamp DL and then, arc discharge starts. Thereafter, the inverter control circuit part 8 switches the operation mode from the electrical breakdown mode to the high frequency preheat mode at a time t2. Fig. 6(b) shows frequency characteristics of the lamp current (a in the figure), the capacitor current flowing through the capacitor C2 (b in the figure) and the choke current flowing through the chokes L2, L3 (c in the figure) at start of the high pressure discharge lamp DL (in the high frequency preheat mode) and a constant of each circuit component is set so that a lamp current I (I2 ≤ I ≤ I3) in the case where the switching frequency is swept at a frequency range f2_{swp} described later may have a desired current value (that is, current value necessary for preheating the lamp electrodes).

In the high frequency preheat mode, the inverter control circuit part 8 sweeps the operating frequency for alternately turning on the pair of switching elements Q3, Q6 and the pair of switching elements Q4, Q5 around second switching frequency f2 (about 39 kHz) as a frequency which is lower than the first switching frequency f1 and is equal to 1/(an add number) (one eleventh in this embodiment) of the resonance frequency f0, that is, in the predetermined frequency range f2_{swp} including the second switching frequency f2. Since the lamp current I flowing to the high pressure discharge lamp DL changes between a lamp current 12 at a maximum frequency in the frequency range f2_{swp} and a lamp current 13 at a minimum frequency in the frequency range f2_{swp} according to the sweeping control of the operating frequency (I2 ≤ I ≤I3), an enough lamp current for preheating is supplied to both the lamp electrodes to sufficiently preheat both the lamp electrodes. The frequency range f2_{swp} including the second switching frequency f2 is a frequency band on the delay phase side with respect to frequency characteristics of the LC resonance circuit 7a and the load circuit part 5 including the lighted high pressure discharge lamp DL.

When both the lamp electrodes of the high pressure discharge lamp DL are equally preheated in the high frequency preheat mode, the inverter control circuit part 8 switches the operation mode from the high frequency preheat mode to the rectangular wave lighting mode at a time t5 in Fig. 7 and thus, the high pressure discharge lamp DL can be stably lighted.

As described above, by performing the three modes: the electrical breakdown mode, the high frequency preheat mode and the rectangular wave lighting mode in series, the inverter control circuit part 8 puts the high pressure discharge lamp DL in the non-lighting state into the stable lighting state. However, the high pressure discharge lamp DL during preheating in the high frequency preheat mode can fade out depending on the state of the high pressure discharge lamp DL.

Here, when the high pressure discharge lamp DL fades out at a time t3 in the high frequency preheat mode, in the high frequency preheat mode, the inverter control circuit part 8 sweeps the operating frequency for alternately turning on the pair of switching elements Q3, Q6 and the pair of switching elements Q4, Q5 in the above-mentioned frequency range f2_{swp}. Accordingly, when the operating frequency gets close to the second switching frequency f2 (for example, 39 kHz) as a frequency of 1/(an add number) (one eleventh) of the resonance frequency f0 (for example, 430kHz), the resonance voltage Vp2 which is higher than the output voltage V1 of the DC power circuit part 3 can be applied between the lamp electrodes of the high pressure discharge lamp DL due to the resonance effect of the LC resonance circuit 7a. Thus, even if fade-out occurs during preheating, electrical breakdown is easy to occur again by applying the resonance voltage between the electrodes of the high pressure discharge lamp DL. Then, by shifting the operation mode to the high frequency preheat mode after occurrence of electrical breakdown and then, to the rectangular wave lighting mode when both the lamp electrodes are sufficiently heated, the high pressure discharge lamp DL can be stably lighted. Therefore, it is possible to provide the high pressure discharge lamp lighting device with less failure to start and improved startability.

The high pressure discharge lamp lighting device in Fig. 5 described in First embodiment may be controlled as in this embodiment and the above-mentioned effect can be obtained.

### (Third embodiment)

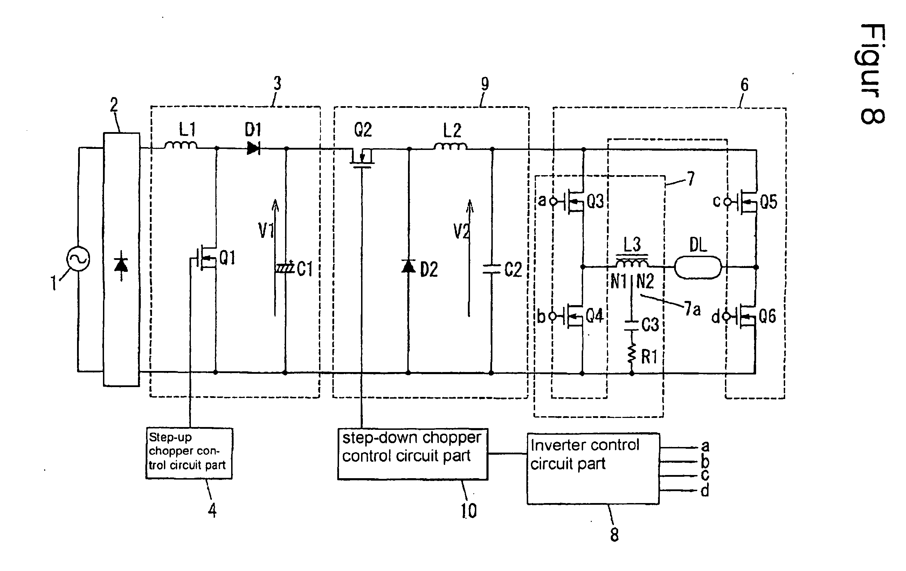

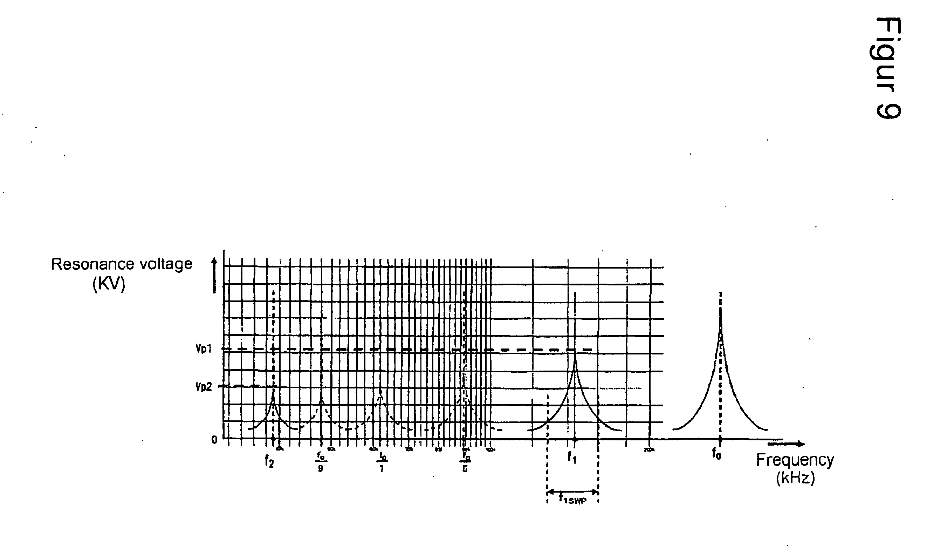

A third embodiment of the present invention will be described referring to Fig. 8 and Fig. 9. A high pressure discharge lamp lighting device in this embodiment, as shown in block circuit diagram of Fig. 8, includes the rectifying circuit part 2 formed of a diode bridge for full-wave rectifying the commercial AC power source 1, a DC power circuit part 3 formed of a step-up chopper for smoothing the output of the rectifying circuit part 2, the step-up chopper control circuit part 4 for controlling an output of the DC power circuit part 3, a power control circuit part 9 for controlling a lighting power of the high pressure discharge lamp DL by lowering the output voltage of the DC power circuit part 3 to a desired voltage value, a step-down chopper control circuit part 10 for controlling an output of the power control circuit part 9, the polarity inverting circuit part 6 for converting the DC output of the power control circuit part 9 into a rectangular wave AC power by switching the DC output and supplying the AC power to the high pressure discharge lamp DL, the ignitor circuit part 7 for generating the starting voltage producing electrical breakdown of the high pressure discharge lamp DL by switching the DC output of the power control circuit part 9 and the inverter control circuit part 8 for controlling switching operation of the polarity inverting circuit part 6 and the ignitor circuit part 7, as main components.

The DC power circuit part 3 includes a step-up type chopper circuit and includes the inductor L1, one end of which is connected to the high-pressure side output end of the rectifying circuit part 2, the switching element Q1 formed of the MOS-type field effect transistor (MOSFET), drain-source of which is connected between the other end of the inductor L1 and the low-pressure side output end of the rectifying circuit part 2, the diode D1, the anode of which is connected to the other end of the inductor L1 and the electrolytic capacitor C1 connected between the cathode of the diode D1 and the low-pressure side output end of the rectifying circuit part 2.

The step-up chopper control circuit part 4 detects the output voltage V1 (voltage between both ends of the electrolytic capacitor C1) of the DC power circuit part 3 and controls the output voltage V1 to a desired voltage value by controlling the switching frequency and an on/off duty ratio of the switching element Q1.

The power control circuit part 9 includes a series circuit formed of a switching element Q2 as a MOS-FET connected to the high-pressure side output end of the DC power circuit part 3 and the inductor L2, a diode D2 connected between the output ends of the DC power circuit part 3 through the switching element Q2 and a capacitor C2 connected between the other end of the inductor L2 and the low-pressure side output end of the DC power circuit part 3, and a voltage between both ends V2 of the capacitor C2 is supplied to the polarity inverting circuit part 6.

The step-down chopper control circuit part 10 changes the output voltage V2 of the power control circuit part 9 by turning on/off the switching element Q2 of the power control circuit part 9 according to a control signal inputted from the inverter control circuit part 8 to control lighting power to the high pressure discharge lamp DL. Here, the rectifying circuit part 2, the DC power circuit part 3, the power control circuit part 9, the step-up chopper control circuit part 4 and the step-down chopper control circuit part 10 form a DC power part.

The polarity inverting circuit part 6 includes a full-bridge circuit having a series circuit formed of switching elements Q3, Q4 and a series circuit formed of switching elements Q5, Q6, each of which is connected between output ends of the power control circuit part 9 (that is, between both ends of the capacitor C2), and the inductor L3 with auto-transformer (single-turn transformer) structure and the high pressure discharge lamp DL are serially connected between the connection point of the switching elements Q3, Q4 and the connection point of the switching elements Q5, Q6.

The ignitor circuit part 7 includes the pair of switching elements Q3, Q4, the pair of switching elements Q5, Q6 in the polarity inverting circuit part 6 connected to both output ends of the DC power circuit part 3, the inductor L3 and the series circuit which is formed of the capacitor C3 and the resistor R1 connected both ends of the primary winding (shunt winding) N1 of the inductor L3 through the switching element Q4, and the series winding N2 of the inductor L3 is connected to the high pressure discharge lamp DL. The primary winding N1 of the inductor L3 and the capacitor C3 form the LC resonance circuit 7a.

The inverter control circuit part 8 is formed of, for example, a microcomputer and controls on/off of the switching element Q2 of the power control circuit part 9 and the switching elements Q3 to Q6 of the polarity inverting circuit part 6 depending on the load state. For example, in stable lighting (in the rectangular wave lighting mode) of the high pressure discharge lamp DL, the inverter control circuit part 8 alternates the first period T21 when the pair of switching elements Q3, Q6 are turned on/off in the state where the pair of switching elements Q4, Q5 located diagonally with each other are turned off and the second period T22 when the pair of switching elements Q4, Q5 are turned on/off in the state where the pair of switching elements Q3, Q6 are turned off at a relatively low frequency.

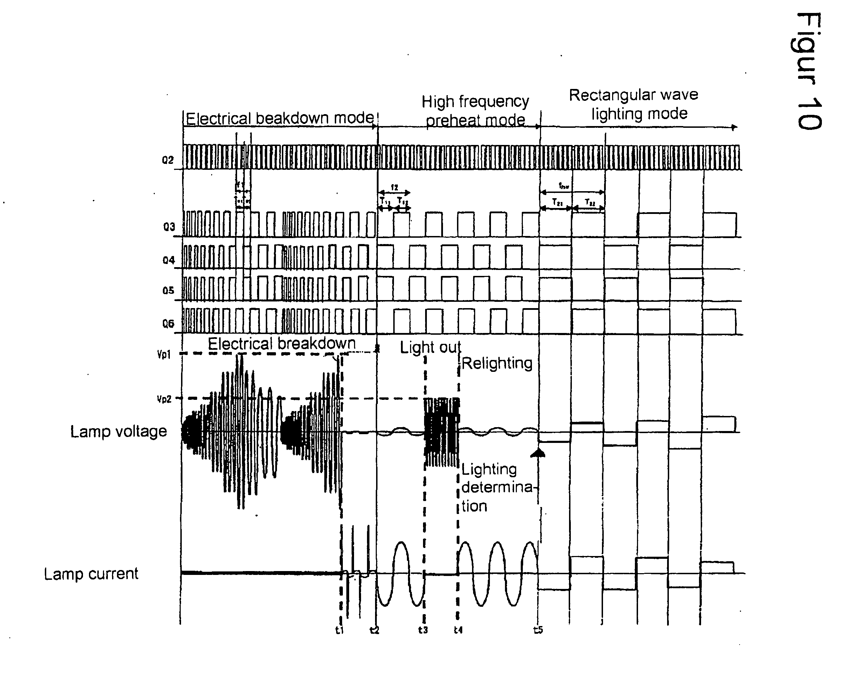

Next, operation of the high pressure discharge lamp DL shifting from the non-lighting state to the stable lighting state by the high pressure discharge lamp lighting device will be described referring to Fig. 9 and Fig. 10. Fig. 10 is a waveform chart of each part of the high pressure discharge lamp DL shifting from the non-lighting state to the stable lighting state.

First, a lighting switch not shown of the high pressure discharge lamp DL is turned on in the non-lighting state, the chopper control circuit part 4 and the inverter control circuit part 8 starts their control operations. The chopper control circuit part 4 controls on/off of the switching element Q1, thereby allowing the DC power circuit part 3 to perform a chopper operation and outputs a DC voltage having a predetermined voltage value obtained by raising the inputted current, and using the step-down chopper control circuit part 10, the inverter control circuit part 8 controls on/off of the switching element Q2 and outputs a DC voltage having a predetermined voltage value obtained by lowering the output voltage of the DC power circuit part 3.

The inverter control circuit part 8 first starts its operation in the electrical breakdown mode (period TM1 in Fig. 10), and controls on/off of the switching element Q2 and outputs the DC voltage having a predetermined voltage value obtained by lowering the output voltage of the DC power circuit part 3 by using the step-down chopper control circuit part 10. Then, by alternately providing the period T01 when the pair of switching elements Q3, Q6 are turned on and the pair of switching elements Q4, Q5 are turned off and the period T02 when the pair of switching elements Q3, Q6 are turned off and the pair of switching elements Q4, Q5 are turned on around the first switching frequency f1 of a few dozens of kHz to a few hundred of kHz, which is equal to 1/(an add number) of the resonance frequency f0 of the LC resonance circuit 7a, the LC resonance circuit 7a is resonated. At this time, a voltage obtained by raising the resonance voltage occurring in the primary winding N1 of the inductor L3 by the winding ratio of the primary winding (shunt winding) N1 to the series winding N2 is applied between the electrodes of the high pressure discharge lamp DL, thereby producing electrical breakdown.

Here, Fig. 9 shows relationship between the frequency characteristics of the resonance circuit 7a and the operating frequency in no-load (in the non-lighting state of the high pressure discharge lamp DL), and in this embodiment, the resonance frequency f0 of the LC resonance circuit 7a is about 430 kHz. In the electrical breakdown mode, the inverter control circuit part 8 sweeps the operating frequency for alternately turning on the pair of switching elements Q3, Q6 and the pair of switching elements Q4, Q5 around the first switching frequency f1 (about 143 kHz) as a frequency of 1/(an add number) (for example, one third) of the resonance frequency f0, that is, in the predetermined frequency range f1_{swp} (for example, 96 kHz to 160 kHz) including the first switching frequency f1.
The magnitude of the lamp voltage V1a applied between both ends of the high pressure discharge lamp DL due to the resonance effect of the LC resonance circuit 7a changes according to sweeping of the operating frequency, and when the operating frequency corresponds to the first switching frequency f1 (about 143 kHz) as the frequency of 1/(an add number) of the resonance frequency f0, the lamp voltage V1a becomes maximum and thus, the starting voltage Vp1 necessary for producing electrical breakdown of the high pressure discharge lamp DL can be applied to the high pressure discharge lamp DL, thereby producing electrical breakdown of the high pressure discharge lamp DL (time t1 in Fig. 10). In the inverter control circuit part 8, the first switching frequency f1 in the electrical breakdown mode may be set to the resonance frequency f0 or the frequency of 1/(an add number) of the resonance frequency f0 and the high resonance voltage can be applied to the high pressure discharge lamp DL due to the resonance effect of the LC resonance circuit 7a, thereby capable of producing electrical breakdown of the high pressure discharge lamp DL.

When electrical breakdown of the high pressure discharge lamp DL is generated by the ignitor circuit part 7 in the above-described electrical breakdown mode, glow discharge occurs in the high pressure discharge lamp DL and then, arc discharge starts. The mode of supplying the preheat current to both the lamp electrodes to rapidly heat both the lamp electrodes in this period is the high frequency preheat mode (period TM2 in Fig. 10). In the high frequency preheat mode, the inverter control circuit part 8 alternates the period T11 when the pair of switching elements Q3, Q6 are turned off and the pair of switching elements Q4, Q5 are turned on and the period T12 when the pair of switching elements Q3, Q6 are turned on and the pair of switching elements Q4, Q5 are turned off at the second switching frequency f2 (about 39 kHz) which is lower than the first switching frequency f1 and is equal to 1/(an add number) (one eleventh in this embodiment) of the resonance frequency f0, and the lamp current 11 is supplied to both the lamp electrodes of the high pressure discharge lamp DL to preheat both the lamp electrodes. The second switching frequency f2 is in the frequency band on the delay phase side with respect to frequency characteristics of the LC resonance circuit 7a and the load circuit part 5 including the lighted high pressure discharge lamp DL.

When both the lamp electrodes of the high pressure discharge lamp DL are equally preheated in the high frequency preheat mode, the inverter control circuit part 8 switches the mode from the high frequency preheat mode to the rectangular wave lighting mode at a time t5 in Fig. 10. In the rectangular wave lighting mode (period TM3 in Fig. 10), the inverter control circuit part 8 alternately turns on/off the pair of switching elements Q4, Q5 and the pair of switching elements Q3, Q6 which are located diagonally to each other at a relatively low frequency flow (for example, a few dozens of Hz to a few hundred of Hz) and applies the rectangular wave AC voltage of a few dozens of Hz to a few hundred of Hz to the high pressure discharge lamp DL. At this time, the lamp voltage is gradually increased as the temperature in a glass bulb of the high pressure discharge lamp DL increases and after lapse of a few minutes, the lamp voltage is put into a substantially uniform stable state. Since arc discharge is continuously generated in this state, the high pressure discharge lamp DL is kept in the stable lighting state.

As described above, although the inverter control circuit part 8 puts the high pressure discharge lamp DL in the non-lighting state into the stable lighting state by sequentially switching the three modes: the electrical breakdown mode, the high frequency preheat mode and the rectangular wave lighting mode, the high pressure discharge lamp DL may fade out during preheating in the high frequency preheat mode depending on the state of the high pressure discharge lamp DL. Fig. 10 is a waveform chart of each part in the case where fade-out occurs in the high frequency preheat mode, and when fade-out occurs at a time t3 in the high frequency preheat mode, the inverter control circuit part 8 alternate the period T11 when the pair of switching elements Q3, Q6 are turned off and the pair of switching elements Q4, Q5 are turned on and the period T12 when the pair of switching elements Q3, Q6 are turned on and the pair of switching elements Q4, Q5 are turned off at the second switching frequency f2. When the resonance frequency of the LC resonance circuit 7a in no-load is defined as f0, the second switching frequency f2 (about 39 kHz) becomes the frequency of 1/(an add number) (for example, one eleventh) of the resonance frequency f0. Accordingly, the resonance voltage Vp2 which is higher than the output voltage V1 (so-called bus voltage) of the DC power circuit part 3 can be applied between the lamp electrodes of the high pressure discharge lamp DL due to the resonance effect of the LC resonance circuit 7a, thereby producing electrical breakdown again. Then, by shifting the high pressure discharge lamp DL to the high frequency preheat mode and then to the rectangular wave lighting mode when both the lamp electrodes are sufficiently heated, the high pressure discharge lamp DL can be stably lighted.

That is, in the discharge lamp lighting device in this embodiment, even if fade-out occurs in the high frequency preheat mode, switching operation is performed at a frequency of 1/(an add number) of resonance frequency f0 in no-load. Thus, the resonance voltage which is higher than the output voltage of the DC power part can be applied to the high pressure discharge lamp DL due to the resonance effect of the LC resonance circuit 7a and electrical breakdown of the high pressure discharge lamp DL can be produced again, thereby returning the operation mode to the high frequency preheat mode. Therefore, it is possible to provide the high pressure discharge lamp lighting device with less failure to start and improved startability.

### (Fourth embodiment)

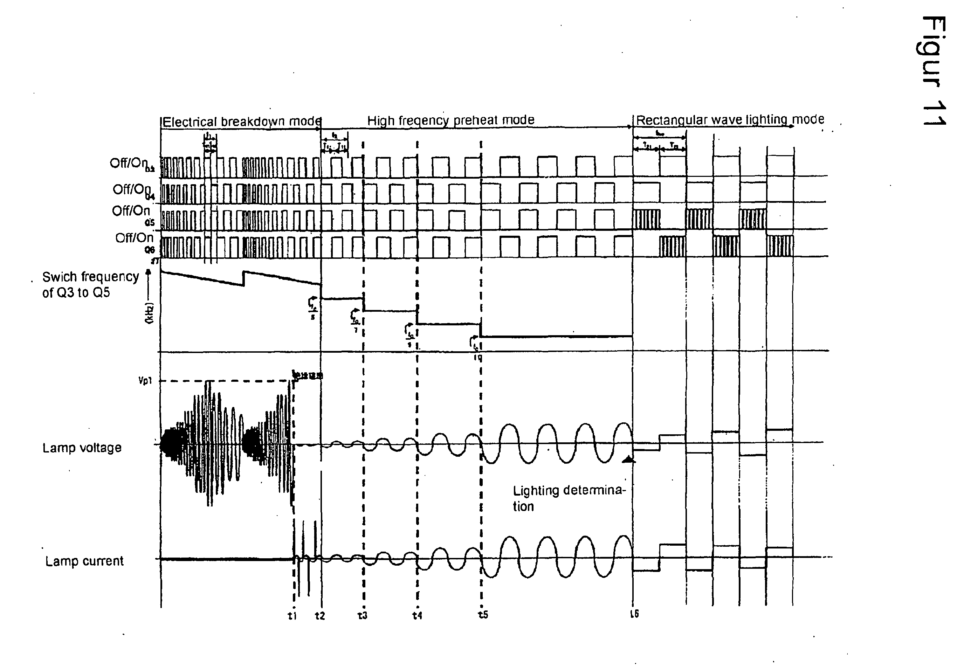

A fourth embodiment of the present invention will be described referring to Fig. 11 to Fig. 14. Although the switching frequency of the ignitor circuit part 7 is switched from the first switching frequency f1 to the second switching frequency f2 when the inverter control circuit part 8 shifts from the electrical breakdown mode to the high frequency preheat mode in First embodiment, the switching frequency may be gradually switched as shown in Fig. 11. Since circuit structure of the high pressure discharge lamp lighting device is the same as that in Fig. 1, illustration and description thereof are omitted.

Fig. 11 is a waveform chart of each part of the high pressure discharge lamp DL shifting from the non-lighting state to the stable lighting state, and when electrical breakdown occurs at the time t1 in the electrical breakdown mode TM1, the operation mode is switched to the high frequency preheat mode at the subsequent time t2. However, the inverter control circuit part 8 lowers the frequency for alternately turning on/off the pair of switching elements Q3, Q6 and the pair of switching elements Q4, Q5 to the frequency (f0/5) of one fifth of the resonance frequency f0 at a time t2, the frequency (f0/7) of one seventh of the resonance frequency f0 at a time t3 and the frequency (f0/9) of one ninth of the resonance frequency f0 at a time t4 in stages, and finally to the frequency (f0/11) of one eleventh of the resonance frequency f0. In other words, in lowering the switching frequency in stages, one or more (in this embodiment, for example, three) intermediate frequencies f0/5, f0/7, f0/9, which are lower than the first switching frequency f1 (= f0/3) and higher than the second switching frequency f2 (= f0/1I) and are equal to 1/(an add number) of the resonance frequency are set and the first switching frequency f0 is lowered to the second switching frequency f2 through the three intermediate frequencies f0/5, f0/7, f0/9 in stages. However, at the timing when the high pressure discharge lamp DL is easy to fade out immediately after the operation mode is switched to the high frequency preheat mode, when the high pressure discharge lamp DL fades out, switching operation is performed at the intermediate frequencies (f0/5, f0/7, f0/9) closer to the resonance frequency f0 than the second switching frequency. Thus, as compared to the case the switching operation is performed at the second switching frequency f2 (= f0/11) immediately after switching of the operation mode, a higher resonance voltage can be generated. When fade-out occurs in the high frequency preheat mod, by applying the high resonance voltage to the high pressure discharge lamp DL, the high pressure discharge lamp DL can be lighted again. In the high frequency preheat mode, since the inverter control circuit part 8 lowers the switching frequency in stages over time and finally switches to the desired switching frequency (f0/11), lighting can be shifted into rectangular wave lighting in the state where the preheat current is increased in stages and the lamp electrodes of the high pressure discharge lamp DL is sufficiently preheated.

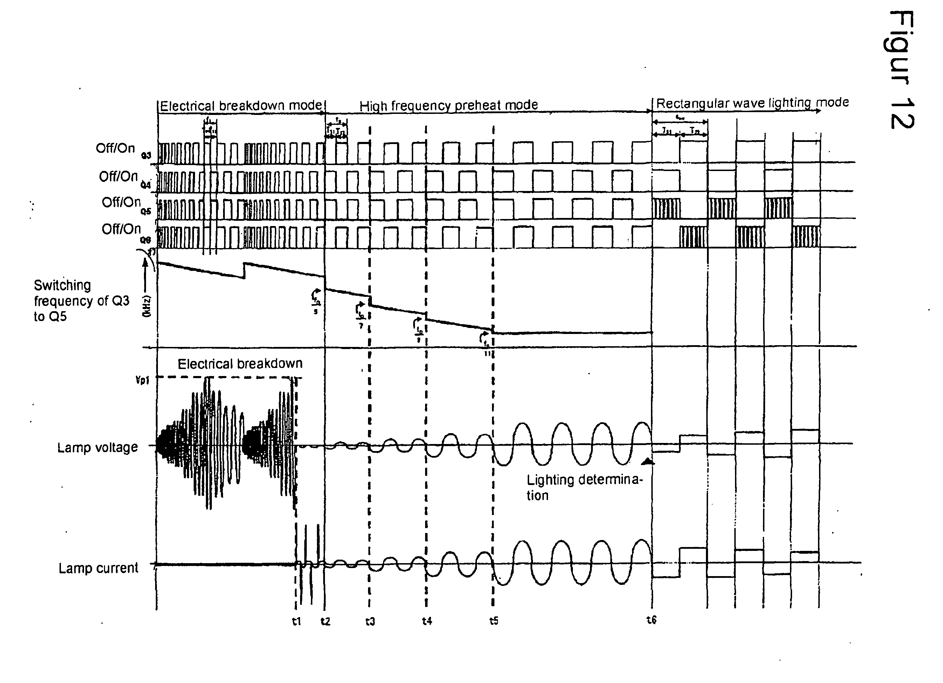

In the example shown in Fig. 11, when the electrical breakdown mode is switched to the high frequency preheat mode, the inverter control circuit part 8 switches the switching frequency in the order of f0/5, f0/7, f0/9 and f0/11 in a stepped manner. However, switching of the switching frequency is not limited to the above-mentioned manner and for example, may be as follows as shown in Fig. 12: the switching frequency is shifted to f0/(2 × n + 1) at the time tn (n = 2, 3, 4) after shift to the high frequency preheat mode, lineally lowered from f0/(2 × n + 1) between the time tn to t(n + 1) and finally switched to (f0/11) at the time t5.

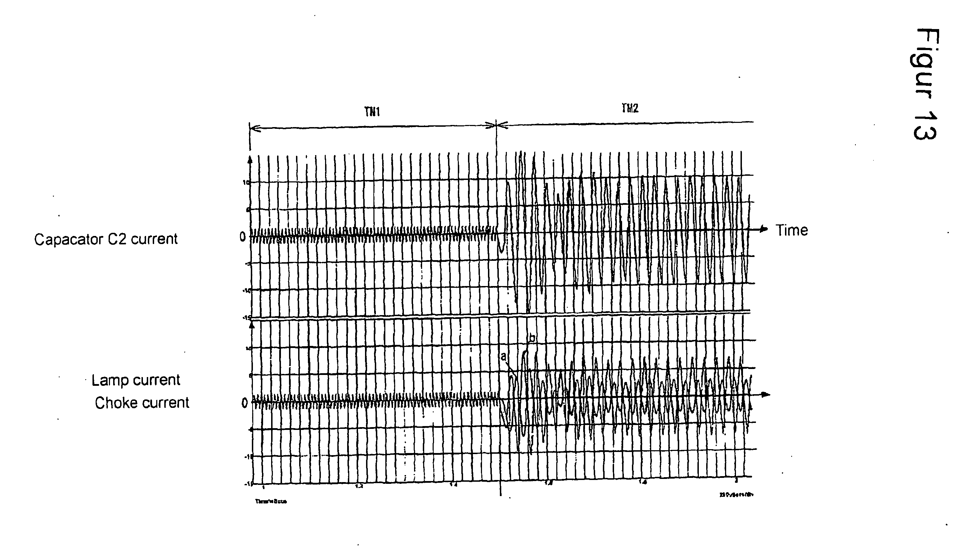

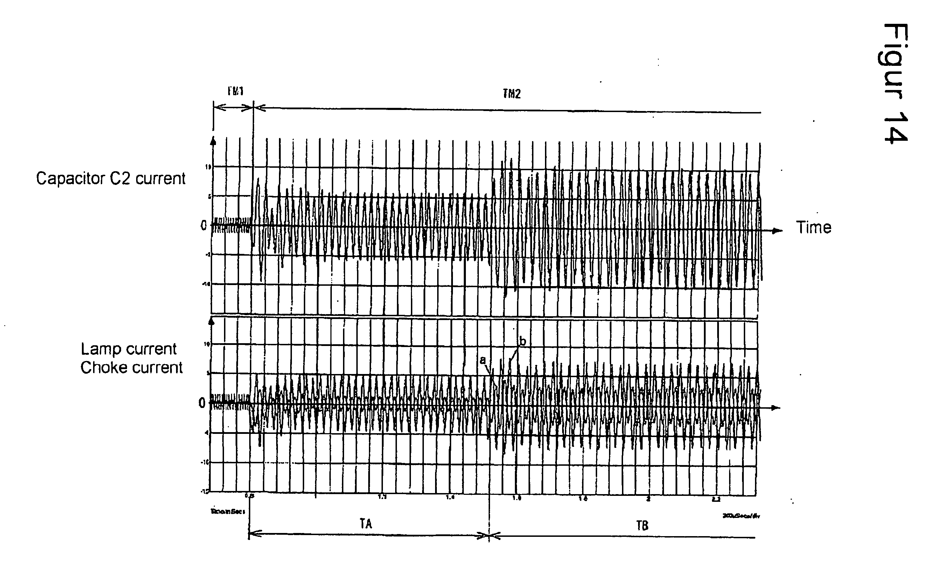

As shown in Fig. 13, in shifting the operation mode from the electrical breakdown mode to the high frequency preheat mode, when the switching frequency is directly switched from the first switching frequency f1 (for example, 140 kHz) to the second switching frequency f2 (for example, 39 kHz), a charging current (oscillating current) to the capacitor C2 becomes excessive. Accordingly, as shown in Fig. 14, in switching of the mode, the first switching frequency f1 may be switched to the frequency which is lower than the switching frequency f1 and higher than the second switching frequency f2 (for example, 47 kHz) (period TA) and then to the second switching frequency f2 (for example, 39kHz) (period TB), thereby reducing a peak of the charging current to the capacitor C2.

Although the method of switching the switching frequency in the high frequency preheat mode in the circuit of First embodiment in this embodiment has been described, the switching frequency may be switched in the pressure discharge lamp lighting device in Second or Third embodiment as in this embodiment and the same effects as described above can be obtained.

### (Fifth embodiment)

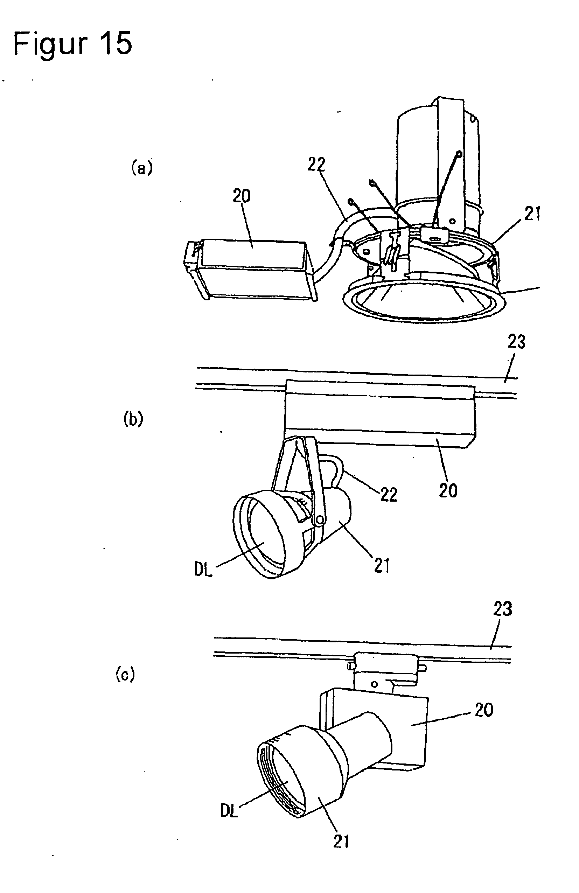

A fifth embodiment of the present invention will be described referring to Figs. 15(a) to (c). Figs. 15(a) to (c) are outside drawings of illumination fixtures which accommodate the high pressure discharge lamp lighting device described in any of first to fourth embodiments in a housing 20 and light the high pressure discharge lamp DL attached to a socket (not shown) in a lighting fitting 21. The high pressure discharge lamp DL is lighted by supplying lighting power to the high pressure discharge lamp from the high pressure discharge lamp lighting device in the housing 20 through a cable 23 and the socket.

Since these illumination fixtures use the high pressure discharge lamp lighting device described in any of first to fourth embodiments, even if fade-out occurs in shift from the electrical breakdown mode to the high frequency preheat mode, by applying the resonance voltage occurring in the LC resonance circuit 7a of the ignitor circuit part 7 to between both the lamp electrodes of the high pressure discharge lamp DL, the high pressure discharge lamp DL can be easily lighted and startability of the high pressure discharge lamp DL can be improved.

Fig. 15(a) shows the illumination fixture using the high pressure discharge lamp DL such as an HID lamp as a downlight and Figs. 15(b) and (c) show fixtures which use the high pressure discharge lamp DL such as an HID lamp as a spotlight and hang and support the lighting fitting 21 from the housing 20 movably attached to a wiring duct rail 23 for feeding commercial power.

An illumination system for controlling lighting of each illumination fixture by using such illumination fixture can obtain the same effects as described.

### [Brief Description of the Drawings]

[Fig. 1] Fig. 1 is a block circuit diagram of a high pressure discharge lamp lighting device in accordance with a first embodiment.
[Fig. 2(a) and Fig. 2(b)] Fig. 2(a) and Fig. 2(b) show relationship between an operating frequency of an ignitor circuit part and frequency characteristics of a resonance circuit in First embodiment, Fig. 2(a) is an explanation view in no-load and Fig. 2(b) is an explanation view in lighting.
[Fig. 3(a) and Fig. 3(b)] Fig. 3(a) is a waveform chart of each part in shift from an electrical breakdown mode to a rectangular wave lighting mode and Fig. 3(b) is a waveform chart of each part during the period Ta in the electrical breakdown mode in First embodiment.
[Fig. 4] Fig. 4 is a waveform chart of each part in shift from the electrical breakdown mode to the rectangular wave lighting mode in the case where fade-out occurs in a high frequency preheat mode in First embodiment.
[Fig. 5] Fig. 5 is a block circuit diagram showing another circuit structure in First embodiment.
[Fig. 6(a) and Fig. 6(b)] Fig. 6(a) and Fig. 6(b) show relationship between the operating frequency of the ignitor circuit part and the frequency characteristics of the resonance circuit in a second embodiment, Fig. 6(a) is an explanation view in no-load and Fig. 6(b) is an explanation view in lighting.
[Fig. 7] Fig. 7 is a waveform chart of each part in shift from the electrical breakdown mode to the rectangular wave lighting mode.
[Fig. 8] Fig. 8 is a block circuit diagram of a discharge lamp lighting device in accordance with a third embodiment.
[Fig. 9] Fig. 9 is an explanation view showing relationship between frequency characteristics of the resonance circuit and the operating frequency of the ignitor circuit part in no-load in the third embodiment.
[Fig. 10] Fig. 10 is a waveform chart of each part in shift from the electrical breakdown mode to the rectangular wave lighting mode in the third embodiment.
[Fig. 11] Fig. 11 is a waveform chart of each part of a discharge lamp lighting device in accordance with a fourth embodiment in shift from the electrical breakdown mode to the rectangular wave lighting mode.
[Fig. 12] Fig. 12 is a waveform chart of each part in shift from the electrical breakdown mode to the rectangular wave lighting mode according to another control method in fourth embodiment.
[Fig. 13] Fig. 13 is a current waveform chart in shift from the electrical breakdown mode to the high frequency preheat mode in the fourth embodiment.
[Fig. 14] Fig. 14 is a current waveform chart in shift from the electrical breakdown mode to the high frequency preheat mode according to another control method in the fourth embodiment.
[Figs. 15(a) to (c)] Figs. 15(a) to (c) are outside drawings of illumination devices using the high pressure discharge lamp lighting device.

### [Description of Reference Numerals]

- 2: Rectifying circuit part (DC power part)
- 3: DC power circuit part (DC power part)
- 5: Load circuit part
- 6: Polarity inverting circuit part (power converting part)
- 7: Ignitor circuit part
- 7a: LC resonance circuit
- 8: Inverter control circuit part (control circuit part)
- DL: High pressure discharge lamp

## Claims

1. A high pressure discharge lamp lighting device comprising: a DC power part (3) an ignitor circuit part including an LC resonance circuit (7a) the ignitor circuit part generating a starting voltage for producing electrical breakdown of a high pressure discharge lamp (DL) by switching an output of the DC power part; a power converting part (6) for converting the output of the DC power part into a rectangular wave AC by switching and supplying the AC to a load circuit part including the high pressure discharge lamp to stably light the high pressure discharge lamp; and a control circuit part (8) for sequentially switching switching operations of the ignitor circuit part and the power converting part among three modes: an electrical breakdown mode of producing electrical breakdown of the high pressure discharge lamp, a high frequency preheat mode of supplying a preheat current to the high pressure discharge lamp and preheating lamp electrodes and a rectangular wave lighting mode of supplying the rectangular wave AC to the high pressure discharge lamp to stably light the high pressure discharge lamp, wherein
the control circuit part, in the electrical breakdown mode, generates the starting voltage by switching the switching element of the ignitor circuit part around a first switching frequency which is 1/(an odd number) of a resonance frequency of the LC resonance circuit (L2, C2) when the lamp is unlit, **characterized in that** in the high frequency preheat mode, supplies a high frequency voltage obtained by switching the switching element of the ignitor circuit part to the load circuit part around a second switching frequency which is lower than the first switching frequency and is equal to 1/(a higher odd number) of the resonance frequency when the lamp is unlit, so that in case of fade-out of the discharge lamp during the high frequency preheat mode electric breakdown can be regenerated.

2. The high pressure discharge lamp lighting device according to claim 1, wherein the control circuit part, in the high frequency preheat mode, sweeps and switches the switching frequency of the ignitor circuit part in a predetermined frequency range including the second switching frequency.

3. The high pressure discharge lamp lighting device according to claim 2, wherein the predetermined frequency range is a frequency band on a delay phase side with respect to frequency characteristics of the LC resonance circuit and the load circuit part including the lighted high pressure discharge lamp.

4. The high pressure discharge lamp lighting device according to any one of claims 1 to 3, wherein in shift from the electrical breakdown mode to the high frequency preheat mode, the control circuit part gradually lowers the switching frequency of the ignitor circuit part over time from around the first switching frequency to around the second switching frequency.

5. The high pressure discharge lamp lighting device according to claim 4, wherein in shift from the electrical breakdown mode to the high frequency preheat mode, the control circuit part lowers the switching frequency of the ignitor circuit part from around the first switching frequency to around the second switching frequency in stages.

6. The high pressure discharge lamp lighting device according to claim 5, wherein in lowering the switching frequency in stages, the control circuit part sets one or more intermediate frequencies which are lower than the first switching frequency and higher than the second switching frequency and are equal to 1/(an odd number) of the resonance frequency and lowers the switching frequency from the first switching frequency to the second switching frequency through the one or more intermediate frequencies in stages.

7. An illumination fixture comprising the high pressure discharge lamp lighting device stated in any one of claims 1 to 6 and a lighting fitting including a discharge lamp receiving electrical power from the discharge lamp lighting device.

8. An illumination system comprising the illumination fixture stated in claim 7 for controlling lighting.

## Patentansprüche

1. Eine Hochdruckentladungslampenbeleuchtungsvorrichtung aufweisend: einen Gleichstromteil (3); einen Zundschaltungsteil, enthaltend eine LC-Resonanzschaltung (7a), wobei der zündschaltungsteil eine Startspannung erzeugt, um einen elektrischen Durchbruch einer Hochdruckentladungslampe (DL) durch Schalten eines Ausgangs des Gleichstromteils zu erzeugen; einen Wandlerteil (6) zum Wandeln des Ausgangssignals des Gleichspannungsteils durch Schalten in ein Rechteck-AC-Signal und zum Bereitstellen des AC-Signals an einem Lastschaltungsteil, der die Hochdruckentladungslampe enthält, um die Hochdruckenzladungslampe stabil zu zünden; und einen Steuerschaltungsteil (8) um sequenziell Schaltvorgänge des Zündungsschaltungsteils und des Wandlerteils zwischen drei Modi zu schalten: einen elektrischen Durchbruchmodus zur Erzeugung des elektrischen Durchbruchs der Hochdruckentladungslampe, einen Hochfrequenzvorheizmodus zum Bereitstellen eines Vorheizstrames für die Hochdruckentladungslampe und zum Vorheizen der Lampenelektroden sowie einen Rechtecksignal-Beleuchtungsmodus, bei dem das Rechteck-AC-Signal an die Hochdruckentladungslampe angelegt wird, um ein stabiles Leuchten der Hochdruckentladungslampe zu erreichen, wobei
der Steuerschaltungsschaltungsteil in dem elektrischen Durchbruchmodus eine Startspannung durch Schalten des Schaltelements des Zündschaltkreises mit etwa einer ersten Schaltfrequenz erzeugt, die gleich 1/(eine ungerade Zahl) einer Resonanzfrequenz mit nicht gezündeter Lampe der LC-Resonanzschaltung (L2, C2) ist, wenn die Lampe nicht gezündet ist, **dadurch gekennzeichnet, dass** in dem Hochfrequenzvorheizmodus eine Hochfrequenzspannung an dem Lastschaltungsteil bereitgestellt wird, die durch Schalten des Schaltelements des Zündschaltungsteils mit etwa einer zweiten Schaltfrequenz erhalten wird, die kleiner ist als die erste Schaltfrequenz und gleich ist zu 1/(eine größere ungerade Zahl) der Resonanzfrequenz mit nicht gezündeter Lampe, so dass im Falle des Erlöschens der Entladungslampe während des Hochfrequenzvorheizmodus der elektrische Durchbruch erneut erzeugt werden kann.

2. Hochdruckentladungslampenbeleuchtungsvorrichtung nach Anspruch 1, wobei der Steuerschaltungsteil in dem Hochfrequenzvorheizmodus schweift und die Schaltfrequenz des Zündschaltungsteils in einem vorgegebenen Frequenzbereich, der die zweite Schaltfrequenz enthält, variiert.

3. Hochdruckentladungslampenbeleuchtungsvorrichtung nach Anspruch 2, wobei der vorgegebene Frequenzbereich ein Frequenzband auf einer Phasenverzögerungsseite ist im Vergleich zu der Frequenzcharakteristik der LC-Resonanzschaltung und des Lastschaltungsteils einschließlich der leuchtenden Hochdruckentladungslampe.

4. Hochdruckentladungslampenbeleuchtungsvorrichtung nach einem der Ansprüche 1 bis 3, wobei der Steuerschaltungsteil beim Umschalten von dem elektrischen Durchbruchmodus zum Hochfrequenzvorheizmodus die Schaltfrequenz des Zündschaltungsteils mit der Zeit graduell von etwa der ersten Schaltfrequenz zu etwa der zweiten Schaltfrequenz verringert.

5. Hochdruckentladungslampen-Beleuchtungsvorrichtung nach Anspruch 4, wobei der Steuerschaltungsteil beim Umschalten von dem elektrischen Durchbruchmodus zum Hochfrequenzvorheizmodus die Schaltfrequenz des Zündschaltungsteils von etwa der ersten Schaltfrequenz zu etwa der zweiten Schaltfrequenz in Stufen verringert.

6. Hochdruckentladungslampen-Beleuchtungsvorrichtung nach Anspruch 5, wobei der Steuerschaltungsteil beim Verringern der Schaltfrequenz in Stufen eine oder mehrere Zwischenfrequenzen vorgibt, die kleiner sind als die erste Schaltfrequenz und größer als die zweite Schaltfrequenz und gleich sind zu 1/(eine ungerade Zahl) der Resonanzfrequenz und die Schaltfrequenz von der ersten Schaltfrequenz zu der zweiten Schaltfrequenz über eine oder mehrere Zwischenfrequenzen in Stufen reduziert.

7. Eine Lampenhalterung, die die Hochdruckentladungslampenbeleuchtungsvorrichtung nach einem der Ansprüche 1 bis 6 und einen Leuchtanschluss aufweist, der eine Entladungslampe enthält, die elektrische Energie von der Entladungslampenbeleuchtungsvorrichtung erhält.

8. Beleuchtungssystem, das die Lampenhalterung gemäß Anspruch 7 aufweist, um eine Beleuchtung zu steuern.

## Revendications

1. Dispositif d'éclairage à lampe à décharge à haute pression comprenant : une partie de puissance à courant continu (3) ; une partie de circuit d'allumage comprenant un circuit de résonance LC (7a), la partie de circuit d'allumage générant une tension de démarrage pour produire un claquage électrique d'une lampe à décharge à haute pression (DL) en commutant une sortie de la partie de puissance à courant continu ; une partie de conversion de puissance (6) pour convertir la sortie de la partie de puissance à courant continu en un courant alternatif à onde rectangulaire en commutant et en fournissant le courant alternatif à une partie de circuit de charge incluant la lampe à décharge à haute pression pour allumer de manière stable la lampe à décharge à haute pression ; et une partie de circuit de commande (8) pour commuter de façon séquentielle les opérations de commutation de la partie de circuit d'allumage et la partie de conversion de puissance parmi trois modes : un mode de claquage électrique consistant à produire le claquage électrique de la lampe à décharge à haute pression, un mode de préchauffage à haute fréquence consistant à fournir un courant de préchauffage à la lampe à décharge à haute pression et à préchauffer des électrodes de lampe et un mode de fonctionnement en onde rectangulaire consistant à fournir le courant alternatif à onde rectangulaire à la lampe à décharge à haute pression pour allumer de manière stable la lampe à décharge à haute pression,
dans lequel la partie de circuit de commande, dans le mode de claquage électrique, génère la tension de démarrage en commutant l'élément de commutation de la partie de circuit d'allumage autour d'une première fréquence de commutation qui vaut 1/(un nombre impair) d'une fréquence de résonance du circuit de résonance LC (L2, C2) quand la lampe n'est pas allumée, **caractérisé en ce que**, dans le mode de préchauffage à haute fréquence, il fournit une tension à haute fréquence obtenue en commutant l'élément de commutation de la partie de circuit d'allumage sur la partie de circuit de charge autour d'une deuxième fréquence de commutation qui est inférieure à la première fréquence de commutation et qui est égale à 1/(un nombre impair supérieur) de la fréquence de résonance quand la lampe n'est pas allumée, de sorte qu'en cas d'extinction de la lampe à décharge pendant le mode de préchauffage à haute fréquence, un claquage électrique peut être régénéré.

2. Dispositif d'éclairage à lampe à décharge à haute pression selon la revendication 1, dans lequel la partie de circuit de commande, dans le mode de préchauffage à haute fréquence, balaie et commute la fréquence de commutation de la partie de circuit d'allumage dans une plage de fréquences prédéterminée incluant la deuxième fréquence de commutation.

3. Dispositif d'éclairage à lampe à décharge à haute pression selon la revendication 2, dans lequel la plage de fréquences prédéterminée est une bande de fréquences d'un côté phase de retard par rapport aux caractéristiques de fréquence du circuit de résonance LC et de la partie de circuit de charge comprenant la lampe à décharge à haute pression allumée.

4. Dispositif d'éclairage à lampe à décharge à haute pression selon l'une quelconque des revendications 1 à 3, dans lequel dans le passage du mode de claquage électrique au mode de préchauffage à haute fréquence, la partie de circuit de commande abaisse progressivement la fréquence de commutation de la partie de circuit d'allumage dans le temps, en partant autour de la première fréquence de commutation pour arriver autour de la deuxième fréquence de commutation.

5. Dispositif d'éclairage à lampe à décharge à haute pression selon la revendication 4, dans lequel dans le passage du mode de claquage électrique au mode de préchauffage à haute fréquence, la partie de circuit de commande abaisse la fréquence de commutation de la partie de circuit d'allumage en partant autour de la première fréquence de commutation pour arriver autour de la deuxième fréquence de commutation par paliers.

6. Dispositif d'éclairage à lampe à décharge à haute pression selon la revendication 5, dans lequel dans l'abaissement de la fréquence de commutation par paliers, la partie de circuit de commande règle une ou plusieurs fréquences intermédiaires qui sont inférieures à la première fréquence de commutation et supérieures à la deuxième fréquence de commutation et qui sont égales à 1/(un nombre impair) de la fréquence de résonance et abaisse la fréquence de commutation de la première fréquence de commutation à la deuxième fréquence de commutation en passant par lesdites une ou plusieurs fréquences intermédiaires par paliers.

7. Installation d'éclairage comprenant le dispositif d'éclairage à lampe à décharge à haute pression de l'une quelconque des revendications 1 à 6 et un accessoire d'éclairage comprenant une lampe à décharge recevant de l'énergie électrique du dispositif d'éclairage à lampe à décharge.

8. Système d'éclairage comprenant l'installation d'éclairage de la revendication 7 pour commander l'allumage.
